(19) Europäisches Patentamt / European Patent Office / Office européen des brevets

(11) **EP 4 636 035 A1**

(12) **EUROPEAN PATENT APPLICATION**
published in accordance with Art. 153(4) EPC

(43) Date of publication:
22.10.2025 Bulletin 2025/43

(21) Application number: 23903437.4

(22) Date of filing: 08.12.2023

(51) International Patent Classification (IPC):
*C08L 67/04* [(2006.01)]   *B29C 55/02* [(2006.01)]
*B29C 55/04* [(2006.01)]   *C08J 5/18* [(2006.01)]
*C08K 5/14* [(2006.01)]   *C08L 101/16* [(2006.01)]

(52) Cooperative Patent Classification (CPC):
B29C 55/02; B29C 55/04; C08J 5/18; C08K 5/14;
C08L 67/04; C08L 101/16

(86) International application number:
PCT/JP2023/043982

(87) International publication number:
WO 2024/128150 (20.06.2024 Gazette 2024/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.12.2022 JP 2022199246

(71) Applicant: Kaneka Corporation
Osaka-shi, Osaka 530-8288 (JP)

(72) Inventors:
• KAMIKARIYA, Naoya
Osaka 566-0072 (JP)
• KITAYAMA, Fuminobu
Osaka 566-0072 (JP)
• SHINOBU, Masahide
Osaka 566-0072 (JP)

(74) Representative: Vossius & Partner
Patentanwälte Rechtsanwälte mbB
Siebertstrasse 3
81675 München (DE)

(54) **RESIN COMPOSITION FOR FORMING STRETCHED FILM**

(57) A resin composition for stretched film molding contains a poly(3-hydroxyalkanoate) resin. In the resin composition, a ratio between a melt viscosity (Pa•s) measured at 170°C and a shear rate of 122 sec$^{-1}$ and a drawdown time (sec) as defined below is from $3.0 \times 10^{-2}$ to $8.0 \times 10^{-2}$ (sec/[Pa•s]). Drawdown time: A time taken for the resin composition to fall 20 cm after being discharged from an orifice in measurement of the melt viscosity.

Fig.1

EP 4 636 035 A1

## Description

### Technical Field

The present invention relates to a poly(3-hydroxyalkanoate) resin-containing resin composition for stretched film molding.

### Background Art

Separate collection and composting of raw garbage have recently been promoted especially in Europe, and there is a demand for plastic products that can be composted together with raw garbage.

In addition, environmental problems caused by waste plastics have become an issue of great concern. In particular, it has been found that a huge amount of plastics dumped at seas or carried into seas through rivers etc. are drifting in the ocean on a global scale. Such plastics, which retain their shapes for a long period of time, are pointed out as having various harmful effects on the ecosystems, and examples of plastics-induced problems include: a phenomenon called ghost fishing where plastics catch or trap marine creatures; and eating disorder from which marine creatures having ingested plastics suffer due to the plastics remaining in their digestive organs.

There is also known a problematic phenomenon where plastics are broken into microplastic particles by the action of ultraviolet rays or any other cause, then the microplastic particles adsorb hazardous compounds present in seawater, and marine creatures ingest the microplastic particles with the adsorbed compounds, so that hazardous substances are introduced into the food chain.

The use of biodegradable plastics is expected as means for addressing the plastics-induced marine pollution as described above. However, a report issued by the United Nations Environment Programme in 2015 states that plastics such as polylactic acid that can be biodegraded through composting are not expected to be degraded quickly in the actual ocean whose temperature is low and cannot therefore be used as a countermeasure against the marine pollution.

Under these circumstances, poly(3-hydroxyalkanoate) resins, which are biodegradable even in seawater, are attracting attention as materials that can be a solution to the above problems.

A known technique for producing a thin, high-strength film is film stretching. For example, in the case of producing a stretched film from a general-purpose resin such as polypropylene, a molten resin is cooled and solidified on a cast roll to form a web, then the web is preheated to a temperature at which the web can be stretched, and the preheated web is stretched. With this technique, the stretched film can be continuously produced at high productivity.

However, poly(3-hydroxyalkanoate) resins are known as materials that are difficult to stretch due to their characteristics.

Patent Literature 1 is directed to achieving stretching of a poly(3-hydroxybutyrate) resin-containing film and describes a method for producing a stretched film. In this method, a thermoplastic resin material composed primarily of a poly(3-hydroxybutyrate) resin is melted and molded into a film, which is crystallized over a certain period of time. After that, the film is subjected to first stretching in which the film is rolled by pressing the film between two rolls. The film is further subjected to second stretching at a temperature higher than a temperature during the rolling, and thus the stretched film is produced.

### Citation List

### Patent Literature

PTL 1: Japanese Laid-Open Patent Application Publication No. 2006-168159

### Summary of Invention

### Technical Problem

With the method of Patent Literature 1, a stretched film composed primarily of a poly(3-hydroxybutyrate) resin can be produced, and a high stretch ratio can be achieved. However, this method necessarily involves an annealing step in which the poly(3-hydroxybutyrate) resin is crystallized before stretching. The annealing step is described as requiring a long time of 12 hours. Disadvantageously, the need for such an annealing step precludes film production by a continuous process, resulting in low productivity.

In addition, in order to achieve a high stretch ratio, the method of Patent Literature 1 requires a two-stage stretching step including first stretching performed by rolling and second stretching performed at a high temperature. Such a production process is disadvantageously complicated.

When the technique for continuously producing a stretched film from a general-purpose resin such as polypropylene is repurposed to produce a stretched film of poly(3-hydroxyalkanoate) resin, the stretching is difficult, and the stretch ratio cannot be increased.

Furthermore, a study by the present inventors has revealed that in continuous production of a stretched film containing a poly(3-hydroxyalkanoate) resin, the temperature conditions that can be used in stretching tend to be limited and the range of possible choices of temperature conditions is very narrow. The range of possible choices of temperature conditions in stretching is desirably wide in order to carry out the stretching on an industrial scale.

In view of the above circumstances, the present invention aims to provide a resin composition for stretched film molding, the resin composition being adapted to allow for producing a poly(3-hydroxyalkanoate) resin-containing stretched film by a continuous process at high productivity, achieving a high stretch ratio, and widening the range of possible choices of temperature conditions in the stretching.

**Solution to Problem**

As a result of intensive studies with the goal of solving the above problem, the present inventors have found that when a poly(3-hydroxyalkanoate) resin-containing resin composition for stretched film molding is one in which a ratio between a melt viscosity and a drawdown time is controlled to satisfy a specific relationship, the use of the resin composition allows for producing a stretched film by a continuous process at high productivity, achieving a high stretch ratio, and widening the range of possible choices of temperature conditions in the stretching. Based on this finding, the inventors have completed the present invention.

Specifically, the present invention relates to a resin composition for stretched film molding, the resin composition containing a poly(3-hydroxyalkanoate) resin, wherein a ratio between a melt viscosity (Pa•s) measured at 170°C and a shear rate of 122 sec$^{-1}$ and a drawdown time (sec) as defined below is from $3.0 \times 10^{-2}$ to $8.0 \times 10^{-2}$ (sec/[Pa•s]).

**Advantageous Effects of Invention**

The present invention can provide a resin composition for stretched film molding, the resin composition being adapted to allow for producing a poly(3-hydroxyalkanoate) resin-containing stretched film by a continuous process at high productivity, achieving a high stretch ratio, and widening the range of possible choices of temperature conditions in the stretching.

According to the present invention, a uniaxially-stretched film stretched in at least one direction (e.g., the MD direction) or a biaxially-stretched film stretched in two different directions (e.g., the MD direction and the TD direction) can be produced. Furthermore, a high stretch ratio can be achieved in each of the different directions. Moreover, the range of possible choices of temperature conditions in the stretching is wide, and this permits flexible selection of the temperature conditions in the stretching. In addition, since the influence of temperature variations which can occur during continuous production is reduced, the stretching step can be performed stably for a long time.

**Brief Description of Drawings**

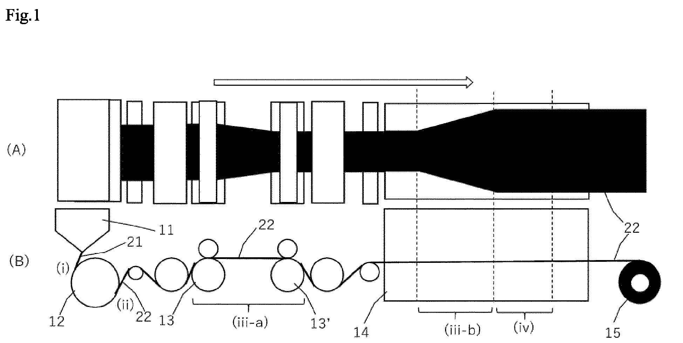

FIG. 1 is a conceptual diagram showing an example of a production line according to one aspect of the present invention, in which the steps are performed that begin with resin composition extrusion followed by film molding and film stretching and that end with film winding; (A) is a top view and (B) is a side view.

**Description of Embodiments**

Hereinafter, an embodiment of the present invention will be described. The present invention is not limited to the embodiment described below.

A resin composition according to the present disclosure is a poly(3-hydroxyalkanoate) resin-containing resin composition for stretched film molding.

The poly(3-hydroxyalkanoate) resin (hereinafter also referred to as "P3HA resin") is a biodegradable aliphatic polyester (a polyester containing no aromatic ring) and specifically a polyhydroxyalkanoate containing 3-hydroxyalkanoic acid repeating units with the formula [-CHR-CH$_2$-CO-O-] (wherein R is an alkyl group represented by C$_n$H$_{2n+1}$ and n is an integer from 1 to 15). In particular, the poly(3-hydroxyalkanoate) resin preferably contains 50 mol% or more, more preferably 70 mol% or more, of the repeating units in the total monomer repeating units (100 mol%).

Among poly(3-hydroxyalkanoate) resins, a poly(3-hydroxybutyrate) resin can be preferably used due to its properties such as high availability and high processability among others.

The poly(3-hydroxybutyrate) resin (hereinafter also referred to as "P3HB resin") is an aliphatic polyester resin that can be produced from a microorganism and that contains 3-hydroxybutyrate as repeating units. The poly(3-hydroxybutyrate) resin may be poly(3-hydroxybutyrate) which contains only 3-hydroxybutyrate as repeating units or may be a copolymer of 3-hydroxybutyrate and another hydroxyalkanoate. The poly(3-hydroxybutyrate) resin may be a mixture of a homopolymer and one or more copolymers or may be a mixture of two or more copolymers.

Specific examples of the poly(3-hydroxybutyrate) resin include poly(3-hydroxybutyrate), poly(3-hydroxybutyrate-co-3-hydroxyhexanoate) (hereinafter also referred to as "P3HB3HH"), poly(3-hydroxybutyrate-co-3-hydroxyvalerate) (hereinafter also referred to as "P3HB3HV"), poly(3-hydroxybutyrate-co-4-hydroxybutyrate), poly(3-hydroxybutyrate-co-3-hydroxyoctanoate), and poly(3-hydroxybutyrate-co-3-hydroxyoctadecanoate). Among these, poly(3-hydroxybutyrate), poly(3-hydroxybutyrate-co-3-hydroxyhexanoate), poly(3-hydroxybutyrate-co-3-hydroxyvalerate), and poly(3-hydroxybutyrate-co-4-hydroxybutyrate) are preferred since they are easy to industrially produce.

Poly(3-hydroxybutyrate-co-3-hydroxyhexanoate) is more preferred for the following reasons: its melting point and crystallinity can be changed by varying the proportions of the repeating units, and thus its physical properties such as Young's modulus and heat resistance can be changed and controlled to levels intermediate between those of polypropylene and polyethylene; and poly(3-hydroxybutyrate-co-3-hydroxyhexanoate) is a plastic that is easy to industrially produce and useful in terms of physical properties. Poly(3-hydroxybutyrate) resins are thermally decomposed easily by heating at 180°C or higher and, in particular, poly(3-hydroxybutyrate-co-3-hydroxyhexanoate) can have a low melting point and be moldable at low temperature. Poly(3-hydroxybutyrate-co-3-hydroxyhexanoate) is preferred also in this respect.

Examples of commercially-available poly(3-hydroxybutyrate-co-3-hydroxyhexanoate) include "Kaneka Biodegradable Polymer Green Planet™" of Kaneka Corporation.

The properties such as melting point and Young's modulus of poly(3-hydroxybutyrate-co-3-hydroxyvalerate) can be changed depending on the ratio between the 3-hydroxybutyrate component and the 3-hydroxyvalerate component. However, the crystallinity of poly(3-hydroxybutyrate-co-3-hydroxyvalerate) is as high as 50% or more because the two components are co-crystallized. Thus, poly(3-hydroxybutyrate-co-3-hydroxyvalerate), albeit being more flexible than poly(3-hydroxybutyrate), cannot offer sufficient improvement in terms of brittleness.

When the poly(3-hydroxybutyrate) resin includes a copolymer of 3-hydroxybutyrate units and other hydroxyalkanoate units, the average content ratio between the 3-hydroxybutyrate units and the other hydroxyalkanoate units (3-hydroxybutyrate units/other hydroxyalkanoate units) in the total monomer units constituting the poly(3-hydroxybutyrate) resin is preferably from 99/1 to 80/20 (mol%/mol%) and more preferably from 97/3 to 85/15 (mol%/mol%) in terms of ensuring both the strength of the stretched film and the stretched film productivity.

The average content ratio between different monomer units in the total monomer units constituting the poly(3-hydroxybutyrate) resin can be determined by a method known to those skilled in the art, such as a method described in paragraph [0047] of WO 2013/147139. The "average content ratio" refers to a molar ratio between different monomer units in the total monomer units constituting the poly(3-hydroxybutyrate) resin. When the poly(3-hydroxybutyrate) resin is a mixture of two or more poly(3-hydroxybutyrate) resins, the average content ratio refers to a molar ratio between different monomer units contained in the total mixture.

The poly(3-hydroxybutyrate) resin may be a mixture of at least two poly(3-hydroxybutyrate) resins differing in the types and/or contents of constituent monomers. In this case, at least one high-crystallinity poly(3-hydroxybutyrate) resin and at least one low-crystallinity poly(3-hydroxybutyrate) resin can be used in combination.

In general, high-crystallinity poly(3-hydroxybutyrate) resins are superior in terms of productivity but have low mechanical strength, while low-crystallinity poly(3-hydroxybutyrate) resins have good mechanical properties although being inferior in terms of productivity. When a high-crystallinity poly(3-hydroxybutyrate) resin and a low-crystallinity poly(3-hydroxybutyrate) resin are used in combination, it is inferred that the high-crystallinity poly(3-hydroxybutyrate) resin forms fine resin crystals and the low-crystallinity poly(3-hydroxybutyrate) resin forms tie molecules that crosslink the resin crystals to one another. The combined use of these resins can improve the strength of the stretched film and the stretched film productivity.

The content of 3-hydroxybutyrate units in the high-crystallinity poly(3-hydroxybutyrate) resin is preferably higher than the average content of 3-hydroxybutyrate units in the total monomer units constituting the poly(3-hydroxybutyrate) resin mixture.

When the high-crystallinity poly(3-hydroxybutyrate) resin contains 3-hydroxybutyrate units and other hydroxyalkanoate units, the content of the other hydroxyalkanoate units in the high-crystallinity resin is preferably from 1 to 5 mol% and more preferably from 2 to 4 mol%.

The high-crystallinity poly(3-hydroxybutyrate) resin is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

The content of 3-hydroxybutyrate units in the low-crystallinity poly(3-hydroxybutyrate) resin is preferably lower than the average content of 3-hydroxybutyrate units in the total monomer units constituting the poly(3-hydroxybutyrate) resin mixture.

When the low-crystallinity poly(3-hydroxybutyrate) resin contains 3-hydroxybutyrate units and other hydroxyalkanoate units, the content of the other hydroxyalkanoate units in the low-crystallinity resin is preferably from 24 to 99 mol%, more preferably from 24 to 50 mol%, even more preferably from 24 to 35 mol%, and particularly preferably from 24 to 30 mol%.

The low-crystallinity poly(3-hydroxybutyrate) resin is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

When the high-crystallinity poly(3-hydroxybutyrate) resin and the low-crystallinity poly(3-hydroxybutyrate) resin are used in combination, the proportion of each resin in the total amount of the two resins is not limited to a particular range. Preferably, the proportion of the high-crystallinity poly(3-hydroxybutyrate) resin is from 10 to 60 wt% and the proportion of the low-crystallinity poly(3-hydroxybutyrate) resin is from 40 to 90 wt%. More preferably, the proportion of the high-crystallinity poly(3-hydroxybutyrate) resin is from 25 to 45 wt% and the proportion of the low-crystallinity poly(3-hydroxybutyrate) resin is from 55 to 75 wt%.

In one embodiment, a middle-crystallinity poly(3-hydroxybutyrate) resin, the crystallinity of which is intermediate between those of the high-crystallinity poly(3-hydroxybutyrate) resin and the low-crystallinity poly(3-hydroxybutyrate) resin, can be further used in combination with the high-crystallinity and low-crystallinity poly(3-hydroxybutyrate) resins.

When the middle-crystallinity poly(3-hydroxybutyrate) resin contains 3-hydroxybutyrate units and other hydroxyalkanoate units, the content of the other hydroxyalkanoate units in the middle-crystallinity resin is preferably from 6 to less than 24 mol%, more preferably from 6 to 22 mol%, even more preferably from 6 to 20 mol%, and still even more preferably from 6 to 18 mol%.

The middle-crystallinity poly(3-hydroxybutyrate) resin is preferably poly(3-hydroxybutyrate-co-3-hydroxyhexanoate) or poly(3-hydroxybutyrate-co-4-hydroxybutyrate) and more preferably poly(3-hydroxybutyrate-co-3-hydroxyhexanoate).

When the middle-crystallinity poly(3-hydroxybutyrate) resin is further used, the proportion of the middle-crystallinity poly(3-hydroxybutyrate) resin in the total amount of the high-crystallinity, low-crystallinity, and middle-crystallinity poly(3-hydroxybutyrate) resins is preferably from 1 to 99 wt%, more preferably from 5 to 90 wt%, and even more preferably from 8 to 85 wt%.

The obtainment of a blend of two or more poly(3-hydroxybutyrate) resins is not limited to using a particular method. A blend of two or more poly(3-hydroxybutyrate) resins may be obtained by microbial production or chemical synthesis. Alternatively, a blend of two or more resins may be obtained by melting and kneading the resins using a device such as an extruder, a kneader, a Banbury mixer, or a roll mill or may be obtained by dissolving and mixing the resins in a solvent and drying the resulting mixture.

The weight-average molecular weight of the total poly(3-hydroxybutyrate) resin is not limited to a particular range. In terms of ensuring both the strength of the stretched film and the stretched film productivity, the weight-average molecular weight is preferably from $20 \times 10^4$ to $200 \times 10^4$, more preferably from $25 \times 10^4$ to $150 \times 10^4$, and even more preferably from $30 \times 10^4$ to $100 \times 10^4$.

When the poly(3-hydroxybutyrate) resin is a mixture of two or more poly(3-hydroxybutyrate) resins, the weight-average molecular weight of each of the poly(3-hydroxybutyrate) resins constituting the mixture is not limited to a particular range. When the high-crystallinity and low-crystallinity poly(3-hydroxybutyrate) resins as described above are used in combination, the weight-average molecular weight of the high-crystallinity poly(3-hydroxybutyrate) resin is preferably from $20 \times 10^4$ to $100 \times 10^4$, more preferably from $22 \times 10^4$ to $80 \times 10^4$, and even more preferably from $25 \times 10^4$ to $60 \times 10^4$ in terms of ensuring both the strength of the stretched film and the stretched film productivity. The weight-average molecular weight of the low-crystallinity poly(3-hydroxybutyrate) resin is preferably from $20 \times 10^4$ to $250 \times 10^4$, more preferably from $25 \times 10^4$ to $230 \times 10^4$, and even more preferably from $30 \times 10^4$ to $200 \times 10^4$ in terms of ensuring both the strength of the stretched film and the stretched film productivity. When the middle-crystallinity poly(3-hydroxybutyrate) resin as described above is further used, the weight-average molecular weight of the middle-crystallinity poly(3-hydroxybutyrate) resin is preferably from $20 \times 10^4$ to $250 \times 10^4$, more preferably from $25 \times 10^4$ to $230 \times 10^4$, and even more preferably from $30 \times 10^4$ to $200 \times 10^4$ in terms of ensuring both the strength of the stretched film and the stretched film productivity.

The weight-average molecular weight of the poly(3-hydroxybutyrate) resin can be measured as a polystyrene-equivalent molecular weight by gel permeation chromatography (HPLC GPC system manufactured by Shimadzu Corporation) using a chloroform solution of the resin. The columns used in the gel permeation chromatography may be any columns suitable for weight-average molecular weight measurement.

The production of the poly(3-hydroxybutyrate) resin is not limited to using a particular method and may be accomplished by a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J.

Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganisms, a genetically modified microorganism incorporating any suitable poly(3-hydroxybutyrate) resin synthesis-related gene may be used depending on the poly(3-hydroxybutyrate) resin to be produced. The culture conditions including the type of the culture substrate may be optimized depending on the poly(3-hydroxybutyrate) resin to be produced.

The resin composition according to the present disclosure is a resin composition for stretched film molding which contains a poly(3-hydroxyalkanoate) resin and in which a ratio between a melt viscosity (Pa•s) measured at 170°C and a shear rate of 122 sec$^{-1}$ and a drawdown time (sec) as described later is from $3.0 \times 10^{-2}$ to $8.0 \times 10^{-2}$ (sec/[Pa•s]). The drawdown time/melt viscosity ratio is up to $8.0 \times 10^{-2}$ (sec/[Pa•s]), preferably up to $6.0 \times 10^{-2}$ (sec/[Pa•s]), and particularly preferably up to $5.0 \times 10^{-2}$ (sec/[Pa•s]). The drawdown time/melt viscosity ratio is at least $3.0 \times 10^{-2}$ (sec/[Pa•s]) and preferably at least $3.5 \times 10^{-2}$ (sec/[Pa•s]). The fact that the drawdown time/melt viscosity ratio in the resin composition according to the present disclosure is controlled in the above range means that the resin composition exhibits an appropriate balance of the melt viscosity and the melt tension, especially when used for stretched film molding. This allows for a high stretch ratio and a wide range of possible choices of temperature conditions in stretched film molding and makes it possible to produce a stretched film by a continuous process at high productivity. Furthermore, in stretched film molding, a uniaxially-stretched film stretched in one direction (e.g., the MD direction) or a biaxially-stretched film stretched in two directions (e.g., the MD and TD directions) can be produced, and a high stretch ratio can be achieved in each direction over a wide range of possible choices of temperature conditions.

In order for the poly(3-hydroxyalkanoate) resin-containing resin composition to have a drawdown time/melt viscosity ratio as described above, the poly(3-hydroxyalkanoate) resin preferably includes a poly(3-hydroxyalkanoate) crosslinked uniformly and moderately. Such a poly(3-hydroxyalkanoate) resin can be obtained, for example, by a method as described later in which an uncrosslinked (linear) poly(3-hydroxyalkanoate) resin is melted and kneaded together with an organic peroxide.

If the poly(3-hydroxyalkanoate) resin contained in the resin composition is crosslinked to an excessive degree, the crosslinking-induced increase in melt tension is extremely large relative to the crosslinking-induced increase in melt viscosity, and the drawdown time/melt viscosity ratio of the resin composition becomes extremely high and exceeds $8.0 \times 10^{-2}$ (sec/[Pa•s]). This renders it difficult to perform stretched film molding stably. If the degree of crosslinking is excessively low or if the melt viscosity is high due to a high molecular weight despite the absence of any branched structure formed by crosslinking, the drawdown time/melt viscosity ratio becomes extremely low and falls below $3.0 \times 10^{-2}$ (sec/[Pa•s]), so that it becomes difficult to perform stretched film molding stably.

The "melt viscosity" in the drawdown time/melt viscosity ratio of the resin composition according to the present disclosure is an apparent melt viscosity, which is defined as follows.

Melt viscosity: An apparent melt viscosity ($\eta$) calculated by the following equation (1) using a load (F) measured with a capillary rheometer during extrusion in which a melt of the resin composition is extruded at a volume flow rate (Q) of 0.716 cm$^3$/min and a shear rate of 122 sec$^{-1}$ from an orifice having a radius (d) of 0.05 cm and a capillary length (1) of 1 cm and connected to a tip of a barrel having a barrel set temperature of 170°C and a radius (D) of 0.4775 cm.

[Math 1]

$$\text{(Equation 1)} \quad \eta = \frac{\pi \left( F / \pi D^2 \right) d^4}{8Ql}$$

The melt viscosity of the resin composition according to the present disclosure is not limited to a particular range but preferably up to 2000 (Pa•s), more preferably up to 1900 (Pa•s), and particularly preferably up to 1800 (Pa•s). The melt viscosity is preferably at least 750 (Pa•s), more preferably at least 800 (Pa•s), and particularly preferably at least 850 (Pa•s). When the melt viscosity is 750 (Pa•s) or more, the molecular chains entwine themselves with each other during stretched film molding, and this reduces the likelihood that the film is broken under stretching. When the melt viscosity is 2000 (Pa•s) or less, the resin pressure is reduced during stretched film molding, and film stretching can be performed stably. In the case where, for example, the resin composition according to the present disclosure is produced by the method as described later, the melt viscosity can be preferably controlled in the above range by adjusting the amount of the organic peroxide added, the P3HA resin molecular weight, and the amount of the uncrosslinked P3HA resin used, etc.

The "drawdown time" in the drawdown time/melt viscosity ratio of the resin composition according to the present disclosure is defined as follows.

Drawdown time: A time taken for the molten resin composition to fall 20 cm after being discharged from the orifice in measurement of the melt viscosity.

The drawdown time of the resin composition according to the present disclosure is not limited to a particular range but preferably up to 60 (sec), more preferably up to 50 (sec), and particularly preferably up to 40 (sec). The drawdown time is preferably at least 25 (sec), more preferably at least 27(sec), and particularly preferably at least 30 (sec). When the drawdown time is 25 (sec) or more, a film of the resin composition can have a sufficient tension to avoid getting broken upon being stretched at a high stretch ratio during stretched film molding. When the drawdown time is 60 (sec) or less, significant gel formation and the attendant hole formation during stretched film molding tend to be prevented. In the case where, for example, the resin composition according to the present disclosure is produced by the method as described later, the drawdown time can be preferably controlled in the above range by adjusting the amount of the organic peroxide added, the P3HA resin molecular weight, and the amount of the uncrosslinked P3HA resin used, etc.

The resin composition according to the present disclosure allows for a wide range of possible choices of temperature conditions in stretched film molding and/or a high value of the maximum stretch ratio at which a film of the resin composition can be stretched without being broken. The index used to quantitatively indicate this nature of the resin composition is a stretch ratio at which stretching of the film at a temperature of 100°C or higher can be accomplished without breakage of the film. The temperature is increased in increments of 10 to 20°C, and the stretch ratio is determined at the different temperatures. For example, the wider is the temperature range over which the maximum possible stretch ratio is 2 or more, the wider the process window is. Such a wide process window prevents the film from being broken due to temperature variations occurring during the production process and enables stable production of a stretched film.

The resin composition according to the present disclosure can be, for example, but is not limited to being, produced by a method including at least the step of melting and kneading a poly(3-hydroxyalkanoate) resin and an organic peroxide in an extruder ("melting-kneading step"). With this method, the resin composition can be obtained in which the drawdown time/melt viscosity ratio is controlled in the range of $3.0 \times 10^{-2}$ to $8.0 \times 10^{-2}$ (sec/[Pa•s]).

[Organic Peroxide]

Examples of the organic peroxide used in the melting-kneading step include diisobutyl peroxide, cumyl peroxyneodecanoate, di-n-propyl peroxydicarbonate, diisopropyl peroxydicarbonate, di-sec-butyl peroxydicarbonate, t-butyl peroxy-2-ethylhexanoate, 1,1,3,3-tetramethylbutyl peroxyneodecanoate, bis(4-t-butylcyclohexyl) peroxydicarbonate, bis(2-ethylhexyl) peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl) peroxide, dilauroyl peroxide, 1,1,3,3-tetramethylbutyl peroxy-2-ethylhexanoate, disuccinic acid peroxide, 2,5-dimethyl-2,5-bis(2-ethylhexanoylperoxy)hexane, t-hexyl peroxy-2-ethylhexanoate, di(4-methylbenzoyl) peroxide, dibenzoyl peroxide, t-butylperoxy-2-ethylhexyl carbonate, t-butylperoxyisopropyl carbonate, 1,6-bis(t-butylperoxycarbonyloxy)hexane, t-butyl peroxy-3,5,5-trimethylhexanoate, t-butyl peroxyacetate, t-butyl peroxybenzoate, t-amyl peroxy-3,5,5-trimethylhexanoate, 2,2-bis(4,4-di-t-butylperoxycyclohexyl)propane, and 2,2-di-t-butylperoxybutane. Among these, t-butylperoxy-2-ethylhexyl carbonate, t-butylperoxyisopropyl carbonate, and t-butyl peroxy-2-ethylhexanoate are preferred. Two or more of the above organic peroxides may be used in combination.

The organic peroxide used may be in any form such as a solid or liquid and may be a liquid diluted with a diluent or the like. An organic peroxide miscible with the P3HA resin (in particular, an organic peroxide that is liquid at room temperature (25°C)) is preferred because such an organic peroxide can be uniformly dispersed in the P3HA resin and because the use of the organic peroxide makes it easier to prevent a local modification reaction in the resin composition and enables easy adjustment of the drawdown time/melt viscosity ratio.

A method for obtaining a P3HA resin composition using an organic peroxide is disclosed, for example, in U.S. Patent No. 9034989. However, the technique disclosed in this patent is characterized in that a P3HA resin is branched using two or more crosslinking agents each of which has two or more radical-reactive functional groups (such as epoxy groups or carbon-carbon double bonds) together with the organic peroxide. In the composition disclosed as a specific example in the U.S. patent, the drawdown time/melt viscosity ratio as defined herein is estimated to be more than $8.0 \times 10^{-2}$ (sec/[Pa•s]). Furthermore, when the processing temperature is equal to or lower than the thermal decomposition temperature of the P3HA resin, some of the peroxide remains unreacted in the composition. With the use of such a composition in extrusion film molding, the remaining peroxide undergoes a reaction to cause local gelation, which results in formation of many foreign matters in the film. For this reason, it is inferred that the patented technique has difficulty in producing a particularly thin stretched film.

The amount of the organic peroxide added in the melting-kneading step is preferably 0.8 parts by weight or less, more preferably 0.6 parts by weight or less, and particularly preferably 0.35 parts by weight or less per 100 parts by weight of the P3HA resin. The amount of the organic peroxide is preferably at least 0.01 parts by weight, more preferably at least 0.02 parts by weight, even more preferably at least 0.05 parts by weight, and particularly preferably at least 0.1 parts by weight. Controlling the amount of the organic peroxide in the above range allows the drawdown time/melt viscosity ratio of the resulting resin composition to be controlled in the range of $3.0 \times 10^{-2}$ to $8.0 \times 10^{-2}$ (sec/[Pa•s]).

The poly(3-hydroxyalkanoate) resin used in the melting-kneading step may be a poly(3-hydroxyalkanoate) resin as previously described. It is preferable to use a poly(3-hydroxyalkanoate) resin that has not been subjected to any crosslinking process. A specific example of such a poly(3-hydroxyalkanoate) resin is one in which the drawdown time/melt viscosity ratio is from $1.5 \times 10^{-2}$ to $2.7 \times 10^{-2}$ (sec/[Pa•s]). The poly(3-hydroxyalkanoate) resin having such a drawdown time/melt viscosity ratio or a composition containing the poly(3-hydroxyalkanoate) resin is itself very unsuitable for stretched film molding.

The amount of the poly(3-hydroxyalkanoate) resin used in the melting-kneading step can be set as appropriate depending on the amount of the poly(3-hydroxyalkanoate) resin to be contained in the resin composition described above.

In the melting-kneading step, at least a P3HA resin and an organic peroxide are introduced into an extruder, by which they are melted and kneaded. In addition to these two components, other components as described later such as a nucleating agent, a lubricant, a filler, and a plasticizer may also be introduced into the extruder, by which the P3HA resin and the organic peroxide may be melted and kneaded together with the other components. However, in the present disclosure, the melting and kneading is preferably performed without addition of any crosslinking agent having two or more radical-reactive functional groups (such as epoxy groups or carbon-carbon double bonds).

In the melting-kneading step, the P3HA resin, the organic peroxide, and the other components used as necessary, may be individually introduced into the extruder. Alternatively, all the components may be mixed together, and then the mixture may be introduced into the extruder. In particular, it is preferable that the organic peroxide and the P3HA resin be individually introduced into the extruder. This way of introduction offers the advantages of improved dispersion of the organic peroxide in the P3HA resin, reduced formation of foreign matters in the resulting molded article, and easy adjustment of the drawdown time/melt viscosity ratio.

The P3HA resin contained in the resin composition according to the present disclosure may consist only of a crosslinked P3HA resin which is a product resulting from the above-described melting and kneading of a P3HA resin and an organic peroxide together, or may include both such a crosslinked P3HA resin and another uncrosslinked P3HA resin. The use of a crosslinked P3HA resin and an uncrosslinked P3HA resin in combination makes it easier to control the drawdown time/melt viscosity ratio of the resin composition in the range of $3.0 \times 10^{-2}$ to $8.0 \times 10^{-2}$ (sec/[Pa•s]). In the case of this combined use, the proportion of the crosslinked P3HA resin in the total amount of the crosslinked and uncrosslinked P3HA resins is preferably 50 wt% or more and more preferably 60 wt% or more. The upper limit of the proportion of the crosslinked P3HA resin is not limited to a particular value, but the proportion of the crosslinked P3HA resin is preferably 90 wt% or less and more preferably 80 wt% or less.

The resin composition or the stretched film may contain an additive usable with the poly(3-hydroxyalkanoate) resin to the extent that the additive does not diminish the effect of the invention. Examples of such an additive include: a colorant such as a pigment or dye; an odor absorber such as activated carbon or zeolite; a flavor such as vanillin or dextrin; and other additives such as a filler, a plasticizer, an oxidation inhibitor, an antioxidant, a weathering resistance improver, an ultraviolet absorber, a nucleating agent, a lubricant, a mold release agent, a water-repellent agent, an antimicrobial agent, and a slidability improver. Only one additive may be contained, or two or more additives may be contained. The amounts of these additives can be set by those skilled in the art as appropriate depending on the intended purpose.

The following describes the nucleating agent, lubricant, filler, and plasticizer in detail.

(Nucleating Agent)

The resin composition or the stretched film may contain a nucleating agent. Examples of the nucleating agent include: polyhydric alcohols such as pentaerythritol, galactitol, and mannitol; and other compounds such as orotic acid, aspartame, cyanuric acid, glycine, zinc phenylphosphonate, and boron nitride. Among these, pentaerythritol is preferred because it is particularly superior in the accelerating effect on crystallization of the poly(3-hydroxyalkanoate) resin. One nucleating agent may be used, or two or more nucleating agents may be used. The proportions of the nucleating agents used can be adjusted as appropriate depending on the intended purpose.

The amount of the nucleating agent used is not limited to a particular range but preferably from 0.1 to 5 parts by weight, more preferably from 0.5 to 3 parts by weight, and even more preferably from 0.7 to 1.5 parts by weight per 100 parts by weight of the total amount of the poly(3-hydroxyalkanoate) resin.

(Lubricant)

The resin composition or the stretched film may contain a lubricant. Examples of the lubricant include behenamide, oleamide, erucamide, stearamide, palmitamide, *N*-stearyl behenamide, N-stearyl erucamide, ethylene bis(stearamide), ethylene bis(oleamide), ethylene bis(erucamide), ethylene bis(lauramide), ethylene bis(capramide), p-phenylene bis(stearamide), and a polycondensation product of ethylenediamine, stearic acid, and sebacic acid. Among these, behenamide and erucamide are preferred because they are particularly superior in the lubricating effect on the poly(3-hydroxyalkanoate) resin. One lubricant may be used, or two or more lubricants may be used. The proportions of the lubricants used can be adjusted as appropriate depending on the intended purpose.

The amount of the lubricant used is not limited to a particular range but preferably from 0.01 to 5 parts by weight, more preferably from 0.05 to 3 parts by weight, and even more preferably from 0.1 to 1.5 parts by weight per 100 parts by weight of the total amount of the poly(3-hydroxyalkanoate) resin.

(Filler)

The resin composition or the stretched film may contain a filler. The inclusion of the filler can further enhance the strength of the stretched film. The filler may be an inorganic filler or an organic filler or may be a combination of both. Examples of the inorganic filler include, but are not limited to, silicate salts, carbonate salts, sulfate salts, phosphate salts, oxides, hydroxides, nitrides, and carbon black. One inorganic filler may be used alone, or two or more inorganic fillers may be used in combination.

The amount of the filler contained is not limited to a particular range but preferably from 1 to 100 parts by weight, more preferably from 3 to 80 parts by weight, even more preferably from 5 to 70 parts by weight, and still even more preferably from 10 to 60 parts by weight per 100 parts by weight of the poly(3-hydroxyalkanoate) resin. The resin composition or the stretched film need not contain any filler.

(Plasticizer)

The resin composition or the stretched film may contain a plasticizer. Examples of the plasticizer include glycerin ester compounds, citric ester compounds, sebacic ester compounds, adipic ester compounds, polyether ester compounds, benzoic ester compounds, phthalic ester compounds, isosorbide ester compounds, polycaprolactone compounds, and dibasic ester compounds. Among these, glycerin ester compounds, citric ester compounds, sebacic ester compounds, and dibasic ester compounds are preferred because they are particularly superior in the plasticizing effect on the poly(3-hydroxyalkanoate) resin. Examples of the glycerin ester compounds include glycerin diacetomonolaurate. Examples of the citric ester compounds include tributyl acetylcitrate. Examples of the sebacic ester compounds include dibutyl sebacate. Examples of the dibasic ester compounds include benzyl methyl diethylene glycol adipate. One plasticizer may be used, or two or more plasticizers may be used. The proportions of the plasticizers used can be adjusted as appropriate depending on the intended purpose.

The amount of the plasticizer used is not limited to a particular range but preferably from 1 to 20 parts by weight, more preferably from 2 to 15 parts by weight, and even more preferably from 3 to 10 parts by weight per 100 parts by weight of the total amount of the poly(3-hydroxyalkanoate) resin. The resin composition or the stretched film need not contain any plasticizer.

The melting and kneading in the melting-kneading step described above can be accomplished according to a known or conventional method. For example, the melting and kneading can be carried out using a device such as an extruder (a single-screw or twin-screw extruder) or a kneader. The conditions of the melting and kneading are not limited to particular details and can be set as appropriate. Preferably, the resin temperature and the residence time are set such that the reaction of the organic peroxide can be completed during the melting and kneading. Specifically, the resin temperature as measured by a thermometer on the die is preferably up to 190°C, more preferably up to 180°C, and particularly preferably up to 170°C and is preferably at least 120°C, more preferably at least 125°C, and particularly preferably at least 130°C. The residence time in the extruder is preferably up to 700 seconds, more preferably up to 500 seconds, and particularly preferably up to 300 seconds and is preferably at least 40 seconds, more preferably at least 50 seconds, and particularly preferably at least 60 seconds.

The resin temperature and the residence time depend on the set temperature, the screw rotational speed, and the screw configuration of the extruder. For example, in order that the residence time at a resin temperature of 180°C will be 20 seconds or more or the residence time at a resin temperature of 170°C will be 60 seconds or more, it is preferable that a barrel zone where the barrel set temperature of the extruder is in the range of 150 to 180°C be provided to extend over half or more of the extruder and that the screw rotational speed be set in the range of 80 to 200 rpm. If the resin temperature is higher than 180°C, deterioration of the poly(3-hydroxyalkanoate) resin could be accelerated. Thus, to prevent the residence time at a resin temperature of 180°C from being 60 seconds or more, it is preferable that, for example, a barrel zone where the barrel set temperature of the extruder is in the range of 120 to 160°C be set to extend over half or less of the extruder. For facilitation of pelletization (e.g., pelletization by strand cutting or underwater cutting) of the resin discharged from the die, the die set temperature is preferably in the range of, for example, 120 to 160°C so as to reduce failure of cutting or sticking together of pellets due to insufficient solidification.

The resin composition according to the present disclosure is not limited to a particular form and may be, for example, in the form of pellets or powder.

The resin composition according to the present disclosure is suitable for use in stretched film molding, and a stretched film can be suitably produced using the resin composition.

The following describes an example of a stretched film production method according to the present embodiment. In this example, stretching is performed in the MD direction and/or the TD direction. The production method of the present invention is not limited to that described below.

The stretched film production method according to the present embodiment includes at least the steps of:

(i) melting the resin composition according to the present disclosure and extruding the molten resin composition onto a cast roll to mold a film;
(ii) separating the film molded in the step (i) from the cast roll to obtain a film; and
(iii-a) heating the film obtained in the step (ii) and stretching the heated film in one direction such as the MD direction to obtain a film.

Through the steps (i), (ii), and (iii-a), a uniaxially-stretched film stretched in the MD direction can be obtained.

The MD direction is also called a machine direction, flow direction, or length direction. The TD direction described below is a direction perpendicular to the MD direction and also called a transverse direction or width direction.

The step (iii-a) is preferably followed by the step of:

(iv) heating the film obtained in the step (iii-a) to a temperature higher than a temperature during the step (iii-a) to obtain a film.

Through the steps (i), (ii), (iii-a), and (iv), a uniaxially-stretched film stretched in the MD direction and having high strength in the MD direction can be obtained.

The step (iii-a) may be followed by the step of:

(iii-b) stretching the film obtained in the step (iii-a) in the TD direction to obtain a film.

Through the steps step (i), (ii), (iii-a), and (iii-b), a biaxially-stretched film stretched in both the MD and TD directions can be obtained.

The step (iii-b) is preferably followed by the step of:

(iv) heating the film obtained in the step (iii-b) to a temperature higher than a temperature during the step (iii-b) to obtain a film.

Through the steps (i), (ii), (iii-a), (iii-b), and (iv), a biaxially-stretched film stretched in both the MD and TD directions and having high strength in both the MD and TD directions can be obtained.

The following describes each of the steps.

(Step (i))

In the step (i), first, the resin composition according to the present disclosure is melted. The melting method is not limited to a particular technique. Preferably, the melting is accomplished by a method including extruding the molten resin composition from a T-die, namely, by extrusion molding. With the use of extrusion molding, a film uniform in thickness can easily be produced. In extrusion molding, a single-screw extruder, a twin-screw extruder, or the like can be used as appropriate.

The conditions used for melting of the resin composition may be any conditions under which the poly(3-hydroxyalkanoate) resin is melted. The temperature of the molten resin composition may be, for example, from about 140 to about 210°C.

Subsequently, the molten resin composition is extruded onto a cast roll to mold a film. The melt of the resin composition comes into contact with the cast roll and is cooled while moving along the surface of the cast roll. Thus, part of the poly(3-hydroxyalkanoate) resin is crystallized.

This step may be a step in which the melt is extruded onto one cast roll or a plurality of cast rolls or may be a step in which a touch roll is placed facing a cast roll and in which the melt extruded onto the cast roll is pressed between the touch roll and the cast roll. This step is not a step in which a film is rolled under pressure.

An air knife or an air chamber may be used to ensure stable contact of the melt with the cast roll. The cast roll may be placed in a water bath, or an air chamber may be used, to efficiently cool the side of the melt opposite from the side in contact with the cast roll.

The set temperature of the cast roll is preferably 60°C or lower to advance crystallization and solidification and enable separation from the cast roll. The set temperature of the cast roll is more preferably 55°C or lower and even more preferably 50°C or lower.

However, if the set temperature of the cast roll is extremely low, the poly(3-hydroxyalkanoate) resin tends to be insufficiently solidified, stick to the cast roll, and become difficult to separate from the cast roll. Thus, the set temperature of the cast roll is preferably at least 0°C, more preferably at least 5°C, even more preferably at least 10°C, still even more preferably at least 12°C, and particularly preferably at least 15°C. The lower limit of the set temperature of the cast roll may be higher than a temperature 10°C above the glass transition temperature (Tg) of the poly(3-hydroxyalkanoate) resin, may be equal to or higher than a temperature 12°C above the Tg, or may be equal to or higher than a temperature 14°C above the Tg.

(Step (ii))

In the step (ii), the film molded in the step (i) is separated from the cast roll to obtain a film. The film separation from the cast roll can be accomplished by transferring the film toward the subsequent stretching step while rotating the cast roll.

(Step (iii-a))

In the step (iii-a), the film obtained in the step (ii) is stretched in the MD direction to obtain a film. The step (iii-a) is preferably performed in series with the step (ii) in one and the same production line.

In the step (iii-a), the film is preferably stretched by elongating the film in the MD direction. The phrase "elongating the film in the MD direction" as used herein means pulling the film in the MD direction, and such elongation should be distinguished from a stretching operation performed by applying pressure in the film thickness direction, such as rolling in which the film is pressed between two rolls.

The elongation in the MD direction is not limited to using a particular technique and can be performed, for example, by using a roll longitudinal stretching machine including a plurality of rolls on which the film is transferred and by operating the plurality of rolls at different rotational speeds. The stretch ratio in the MD direction can be determined by the ratio between the roll rotational speed before stretching and the roll rotational speed after stretching.

The film surface temperature in the step (iii-a) is preferably 100°C or higher to melt the poly(3-hydroxyalkanoate) resin crystals in part and enable stretching of the film. The film surface temperature is preferably 110°C or higher and more preferably 120°C or higher. When the film surface temperature is 100°C or higher, the resin crystals in the film are melted at least in part, and this allows the film to be stretched without breakage. In some cases, a large amount of resin crystals could remain despite the film surface temperature being 100°C or higher and cause uneven stretching. With the use of the resin composition for stretched film molding according to the present disclosure, the film can be evenly stretched at a high stretch ratio over a wide temperature range. The film surface temperature in the step (iii-a) is preferably up to 150°C and more preferably up to 140°C.

Control of the film temperature in the step (iii-a) is not limited to using particular means, and examples of control techniques include: a technique in which an air stream adjusted to a given temperature is applied to the film; a technique in which the film temperature is controlled by setting rolls to a given temperature; a technique in which the film temperature is controlled to a given temperature by heating the film using auxiliary heating means such as an IR heater; and a technique in which the film is passed through an oven adjusted to a given temperature. One of these techniques may be used alone, or two or more thereof may be used in combination.

The stretch ratio in the step (iii-a) is not limited to a particular range but preferably 2 or more. The stretch ratio is more preferably 2.5 or more and even more preferably 3 or more. In the present embodiment, such a high stretch ratio can be achieved thanks to the use of the resin composition for stretched film molding according to the present disclosure. The upper limit of the stretch ratio is not limited to a particular value and may be chosen as appropriate. For example, the stretch ratio may be 8 or less.

(Step (iii-b))

In the step (iii-b), the stretched film obtained in the step (iii-a) is further stretched in the TD direction to obtain a film. The step (iii-b) is preferably performed in series with the step (iii-a) in one and the same production line.

In the step (iii-b), the film is preferably stretched by elongating the film in the TD direction. As with the above-described elongation in the MD direction, the phrase "elongating the film in the TD direction" means pulling the film in the TD direction, and such elongation should be distinguished from a stretching operation performed by applying pressure in the film thickness direction, such as rolling in which the film is pressed between two rolls.

The elongation in the TD direction is not limited to using a particular technique and can be performed, for example, by using a transverse stretching machine such as a clip tenter to clamp the film at both width ends and pull the clamped film in the TD direction. The stretch ratio in the TD direction can be determined by the ratio between the width of the clamped film before stretching and the width of the clamped film after stretching.

The film surface temperature in the step (iii-b) is preferably from 60 to 150°C to melt the poly(3-hydroxyalkanoate) resin crystals in part and prevent excessive crystallization. The film surface temperature is more preferably from 65 to 135°C. When the film surface temperature is 60°C or higher, the film can be evenly stretched without breakage. When the film surface temperature is 150°C or lower, film breakage due to melting of the resin can be prevented.

Control of the film temperature in the step (iii-b) is not limited to using particular means, and any of the techniques mentioned above for the step (iii-a) can be used as appropriate. One of the mentioned techniques may be used alone, or two or more thereof may be used in combination.

The stretch ratio in the step (iii-b) is not limited to a particular range but preferably 2 or more. The stretch ratio is more preferably 3 or more and even more preferably 4 or more. In the present embodiment, such a high stretch ratio can be achieved thanks to the use of the resin composition for stretched film molding according to the present disclosure. The upper limit of the stretch ratio is not limited to a particular value and may be chosen as appropriate. For example, the stretch ratio may be 8 or less.

(Step (iv))

In the step (iv), the film obtained in the step (iii-a) or the film obtained in the step (iii-b) is heated to a temperature higher than a temperature during the step (iii-a) or (iii-b) to obtain a film. The step (iv) is preferably performed in series with the step (iii-a) or (iii-b) in one and the same production line.

This step can increase the crystallinity and therefore the strength of the stretched film and can stabilize the physical properties of the stretched film.

The film temperature in this step is a temperature that is higher than the film temperature in the step (iii-a) or (iii-b) and preferably 60°C or higher. The film temperature is more preferably 70°C or higher and even more preferably 80°C or higher. The upper limit of the film temperature may be any temperature equal to or lower than the melting temperature of the resin. The film temperature is preferably up to 150°C, more preferably up to 145°C, and even more preferably up to 140°C.

In terms of sufficiently accelerating the crystallization of the poly(3-hydroxyalkanoate) resin in this step, the film temperature in this step is preferably 10°C or more above, more preferably 20°C or more above, even more preferably 30°C or more above, still even more preferably 40°C or more above, and particularly preferably 50°C or more above, the film temperature in the step (iii-a) or (iii-b).

Control of the film temperature in the step (iv) is not limited to using particular means, and any of the techniques mentioned above for the step (iii-a) can be used as appropriate. One of the mentioned techniques may be used alone, or two or more thereof may be used in combination.

The step (iv) is preferably performed with tension applied to the film in the direction in which the film has been stretched. This allows the film to avoid heat shrinkage. Specifically, when the step (iv) follows the step (iii-a), the step (iv) is preferably performed with tension applied to the film in the MD direction. When the step (iv) follows the step (iii-b), the step (iv) is preferably performed with tension applied to the film in both the MD and TD directions. The application of tension in the MD direction may be done, for example, by controlling respective rotational speeds of a plurality of rolls on which the film is transferred. The application of tension in the TD direction may be done, for example, by performing the step (iv) while clamping the film at both width ends and pulling the clamped film in the TD direction by means of a transverse stretching machine.

It should be noted that the step (iv) does not include substantial stretching of the film. The phrase "not include substantial stretching of the film" means that in the step (iv) any operation intended to stretch the film is not performed.

In the stretched film production method according to the present embodiment, the steps from melt extrusion of the resin composition to formation of the stretched film can be performed by a continuous process. The term "continuous process" as used herein refers to a process in which molding of the resin composition into a film is followed by a stretching step without any time-consuming crystallization step as described in Patent Literature 1 (specifically, the step of rapidly cooling the film in ice water and then annealing the film at 40°C for 12 hours).

In the stretched film production method according to the present embodiment, it is preferable to continuously transfer the film throughout the steps from the step (i) to a final step. In this case, a stretched film can be produced by an industrially simple process at high productivity. This way of production may be performed along with winding of the produced stretched film on a winding roll. The "final step" refers to the step (iii-a) when the method ends with the step (iii-a), refers to the step (iii-b) when the method ends with the step (iii-b), and refers to the step (iv) when the method ends with the step (iv).

When the film is continuously transferred, the transfer speed is not limited to a particular range. In terms of film productivity, the transfer speed is preferably 5 m/min or more before the start of stretching. In terms of production stability, the transfer speed is preferably 50 m/min or less before the start of stretching.

FIG. 1 shows an example of a production line in which the steps (i) to (iv) are performed along with continuous transfer of the film. The rightward arrow in the figure indicates the film transfer direction.

First, the resin composition according to the present disclosure is melted in an extruder 11. A molten resin composition 21 is extruded onto a cast roll 12 from a T-die coupled to the forward end of the extruder and is molded into a film on the surface of the roll (step (i)).

The molten resin composition is cooled while moving along the surface of the cast roll 12. During this cooling, part of the resin contained in the resin composition crystallizes. A solidified film 22 is separated from the cast roll 12 in line with the film transfer path (step (ii)).

After that, the film 22 is guided to stretching rolls 13 and 13' arranged one behind the other in the film transfer direction. The subsequent roll 13' is set to operate at a higher rotational speed than the preceding roll 13. Due to this rotational speed difference, the film 22 is pulled in the MD direction and thus stretched in the MD direction (step (iii-a)). The film temperature during the stretching in the MD direction is controlled by setting the roll 13 to a given temperature by means of a heat medium.

The film 22 stretched in the MD direction is guided into a transverse stretching machine 14 which is a clip tenter. In the transverse stretching machine, the film is clamped at both width ends and is pulled in the TD direction; thus, the film is stretched in the TD direction (step (iii-b)). An air stream adjusted to a given temperature is applied to the film in the transverse stretching machine to control the film temperature during the stretching in the TD direction.

After a desired stretch ratio in the TD direction is achieved, the internal temperature of the transverse stretching machine 14 is raised while the film remains clamped at both width ends. Thus, the film is heated to allow the crystallization of the poly(3-hydroxyalkanoate) resin to proceed (step (iv)).

After that, the film 22 is wound on a winding roll 15. In this manner, a biaxially-stretched film stretched in both the MD and TD directions can be obtained. In the process described above, the film is continuously transferred throughout the steps that begin with resin composition extrusion, followed by film molding and film stretching, and that end with film winding.

The thickness of the stretched film produced is not limited to a particular range and can be set as appropriate by those skilled in the art. In terms of, for example, uniformity in thickness, visual appearance, strength, and low weight of the film, the thickness of the film is preferably from 10 to 200 $\mu$m, more preferably from 12 to 150 $\mu$m, and even more preferably from 15 to 100 $\mu$m.

Another layer may be formed on the stretched film. Examples of the other layer include a resin layer, an inorganic material layer, a metal layer, a metal oxide layer, and a printed layer. The other layer may be a lamination layer, a coating layer, or a vapor-deposited layer.

The stretched film has high strength even when it is thin. Thus, the stretched film is suitable for use as a packaging film, a heat-sealable film, a twist film, or the like.

In the following items, preferred aspects of the present disclosure are listed. The present invention is not limited to the following items.

[Item 1]

A resin composition for stretched film molding, the resin composition containing a poly(3-hydroxyalkanoate) resin, wherein

a ratio between a melt viscosity (Pa•s) measured at 170°C and a shear rate of 122 sec$^{-1}$ and a drawdown time (sec) is from $3.0 \times 10^{-2}$ to $8.0 \times 10^{-2}$ (sec/[Pa•s]), the drawdown time being a time taken for the resin composition to fall 20 cm after being discharged from an orifice in measurement of the melt viscosity.

[Item 2]

The resin composition for stretched film molding according to item 1, wherein the melt viscosity is from 750 to 2000 Pa•s.

[Item 3]

The resin composition for stretched film molding according to item 1 or 2, wherein the drawdown time is from 25 to 60 sec.

[Item 4]

The resin composition for stretched film molding according to any one of items 1 to 3, wherein the poly(3-hydroxyalkanoate) resin contains a product resulting from melting and kneading a poly(3-hydroxyalkanoate) resin and an organic peroxide together.

[Item 5]

The resin composition for stretched film molding according to any one of items 1 to 4, wherein the poly(3-hydroxyalkanoate) resin contains a poly(3-hydroxybutyrate) resin.

[Item 6]

A stretched film containing the resin composition for stretched film molding according to any one of items 1 to 5.

[Item 7]

A stretched film production method including:

a film molding step of molding a film using the resin composition for stretched film molding according to any one of items 1 to 5; and
a stretching step of stretching the film in at least one direction.

[Item 8]

The stretched film production method according to item 7, wherein in the stretching step, the film is stretched at a film surface temperature of 100 to 150°C.

[Item 9]

The stretched film production method according to item 7 or 8, wherein in the stretching step, the film is stretched at a stretch ratio of 2 or more.

[Item 10]

The stretched film production method according to item 7 or 8, wherein in the stretching step, the film is stretched in at least two different directions.

[Item 11]

The stretched film production method according to item 10, wherein in the stretching step, the film is stretched at a stretch ratio of 2 or more in the at least two directions.

**Examples**

Hereinafter, the present invention will be described more specifically using examples and comparative examples. The present invention is not limited by these examples in any respect.
The following raw materials were used in the examples.

(Poly(3-Hydroxyalkanoate) Resins)

The P3HA resins used were the poly(3-hydroxybutyrate-co-3-hydroxyhexanoate) (P3HB3HH) resins A-1 to A-4 listed below. The terms "3HB" and "3HH" as used below refer to 3-hydroxybutyrate repeating units and 3-hydroxyhexanoate repeating units, respectively.
A-1: P3HB3HH (average content ratio 3HB/3HH = 97.2/2.8 (mol%/mol%), weight-average molecular weight = 66 $\times$ $10^4$ g/mol, glass transition temperature = 6°C)
This resin was produced according to a method described in Example 2 of WO 2019/142845.
A-2: P3HB3HH (average content ratio 3HB/3HH = 71.8/28.2 (mol%/mol%), weight-average molecular weight = 66 $\times$ $10^4$ g/mol, glass transition temperature = 1°C)
This resin was produced according to a method described in Example 9 of WO 2019/142845.
A-3: P3HB3HH (average content ratio 3HB/3HH = 94/6 (mol%/mol%), weight-average molecular weight = 60 $\times$ $10^4$ g/mol, glass transition temperature = 6°C)
This resin was produced according to a method described in Example 1 of WO 2019/142845.
A-4: P3HB3HH (average content ratio 3HB/3HH = 94/6 (mol%/mol%), weight-average molecular weight = 40 $\times$ $10^4$ g/mol, glass transition temperature = 6°C)
This resin was produced according to a method described in Example 1 of WO 2019/142845.

(Organic Peroxide)

B-1: Perbutyl I manufactured by NOF Corporation (*t*-butylperoxyisopropyl carbonate, one-minute half-life temperature = 159°C)

(Lubricant)

C-1: Behenamide (BNT-22H manufactured by Nippon Fine Chemical Co., Ltd.)

(Nucleating Agent)

D-1: Pentaerythritol (Neulizer P manufactured by Mitsubishi Chemical Corporation)
The evaluation procedures described below were performed in the examples and the comparative examples.

[Melt Viscosity]

A capillary rheometer manufactured by Shimadzu Corporation was used to measure a load (F) during extrusion in which a melt of a resin composition was extruded at a volume flow rate (Q) of 0.716 cm$^3$/min and a shear rate of 122 sec$^{-1}$ from an orifice having a radius (d) of 0.05 cm and a capillary length (1) of 1 cm and connected to a tip of a barrel having a barrel set temperature of 170°C and a radius (D) of 0.4775 cm. The apparent melt viscosity ($\eta$) was calculated by the following equation (1).
[Math 1]

$$(\text{Equation } 1) \quad \eta = \frac{\pi \left( F/_{\pi D^2} \right) d^4}{8 Q l}$$

[Drawdown Time]

In the melt viscosity measurement described above, the time taken for the molten resin composition discharged from the orifice to fall 20 cm was measured as the drawdown time (DT).

[Tolerable Stretching Limit]

Films were made from resin pellets by means of a T-die. Each film was continuously stretched by means of a roll stretching machine in the MD direction at a given stretch temperature shown in Table 1. The tolerable stretching limit was evaluated according to the evaluation criteria described below.

<Evaluation Criteria>

The stretching was regarded as successful when a stretched film was obtained without film breakage during the stretching and the stretched film obtained did not have any sign of uneven stretching (an unevenly stretched portion such as a portion with non-uniform film thickness) observable by visual inspection. The maximum stretch ratio at which the stretching was successful was determined at different stretch temperatures, and the maximum stretch ratio was used to indicate the tolerable stretching limit.

(Example 1)

(Method for Producing Resin Composition)

Thirty parts by weight of the poly(3-hydroxyalkanoate) resin A-1, 30 parts by weight of the poly(3-hydroxyalkanoate) resin A-2, and 10 parts by weight of the poly(3-hydroxyalkanoate) resin A-3 were dry-blended with 0.105 parts by weight of the organic peroxide B-1, 0.5 parts by weight of the lubricant C-1, and 1.0 parts by weight of the nucleating agent D-1. The resulting resin material was introduced into the hopper of a 26-mm-diameter corotating twin-screw extruder whose cylinder temperature and die temperature were set to 150°C, and the resin material was allowed to undergo and complete a crosslinking reaction in the extruder. After that, 30 parts by weight of the poly(3-hydroxyalkanoate) resin A-4 was introduced into the extruder from a side feeder, and the contents of the extruder were further melted and kneaded. The kneaded material was extruded as a strand from the die, and the strand was solidified by passing it through a water bath filled with 45°C water. The solidified strand was cut by a pelletizer to obtain resin pellets P-1. The melt viscosity ($\eta$), drawdown time (DT), and DT/$\eta$ determined for the obtained resin pellets are shown in Table 1.

[Table 1]

| | | Ex. 1 | Ex. 2 | Ex. 3 | Comp. 1 | Comp. 2 | Comp. 3 | Comp. 4 |
|---|---|---|---|---|---|---|---|---|
| | Resin pellets | P-1 | P-2 | P-3 | P-4 | P-5 | P-6 | P-7 |
| P3HA resin (parts by weight) | A-1 | 30 | 30 | 30 | 30 | 30 | | |
| | A-2 | 30 | 30 | 30 | 30 | 30 | | |
| | A-3 | 10 | 10 | 10 | 10 | 10 | | 100 |
| | A-4 | | | | | | 100 | |
| | A-4 (Introduced from side feeder) | 30 | 30 | 30 | 30 | 30 | | |
| Organic peroxide (parts by weight) | B-1 | 0.105 | 0.053 | 0.026 | 0 | 0.011 | 0 | 0 |
| Lubricant (parts by weight) | C-1 | 0.5 | 0.5 | 0.5 | 0.5 | 0.5 | 0.5 | 0.5 |
| Nucleating agent (parts by weight) | D-1 | 1.0 | 1.0 | 1.0 | 1.0 | 1.0 | 1.0 | 1.0 |
| Resin pellets evaluation results | Drawdown time | 40 sec | 31 sec | 28 sec | 25 sec | 26 sec | 10 sec | 18 sec |
| | Melt viscosity | 1120 Pa•s | 960 Pa•s | 920 Pa•s | 950 Pa•s | 920 Pa•s | 510 Pa•s | 960 Pa•s |
| | DT/$\eta$ (sec/[Pa•s]) | $3.6 \times 10^{-2}$ | $3.2 \times 10^{-2}$ | $3.0 \times 10^{-2}$ | $2.6 \times 10^{-2}$ | $2.8 \times 10^{-2}$ | $2.0 \times 10^{-2}$ | $1.9 \times 10^{-2}$ |
| Tolerable stretching limit (Maximum possible stretch ratio) | Stretch temperature 120°C | 4.0 | 4.0 | 4.0 | 1.5 | 1.8 | 1.1 | 1.3 |
| | Stretch temperature 130°C | 4.0 | 4.0 | 4.0 | 2.0 | 2.5 | 1.1 | 1.3 |
| | Stretch temperature 140°C | 4.0 | 4.0 | 4.0 | 4.0 | 4.0 | 1.1 | 1.3 |
| Introduced from side feeder: P3HA resin introduced after melting and kneading of P3HA resin and organic peroxide | | | | | | | | |

(Production of Uniaxially-Stretched Film Stretched in MD Direction)

A 65-mm-diameter single-screw extruder was used to which a 700-mm-wide T-die was coupled. The cylinder temperature and the die temperature of the single-screw extruder were set to 160°C.

The resin pellets P-1 were introduced into the single-screw extruder, and the resin material was extruded as a film through the T-die. The molded film was cooled on a cooling roll at a set temperature of 50°C, and the cooled film was taken up on a take-up roll and continuously stretched by a roll longitudinal stretching machine in the longitudinal (MD) direction. This stretching was attempted at different stretch temperatures of 120°C, 130°C, and 140°C (the term "stretch temperature" as used hereinafter refers to a film surface temperature), and the maximum stretch ratio at which the film was successfully stretched without uneven stretching or breakage was determined for each temperature. The results are shown in Table 1.

(Production of Biaxially-Stretched Film Stretched in MD and TD Directions)

The resin pellets P-1 were introduced into the single-screw extruder described above, and the resin material was extruded as a film through the T-die. The molded film was cooled on a cooling roll at a set temperature of 50°C, and the cooled film was taken up on a take-up roll and continuously stretched by a roll longitudinal stretching machine in the MD direction at a stretch temperature of 140°C and a stretch ratio of 2. After that, the film was continuously stretched by a transverse stretching machine (clip tenter) in the transverse (TD) direction at a stretch temperature of 100°C and a stretch ratio of 3. The film subjected to the biaxial stretching was cooled to 50°C, and the width ends of the cooled film were cut off to obtain a biaxially-stretched film having a width of 1200 mm and a thickness of 20 μm. The above processes were performed in series.

(Example 2)

Resin pellets P-2 were produced in the same manner as the resin pellets of Example 1, except that the organic peroxide was added in an amount of 0.053 parts by weight. The melt viscosity (η), drawdown time (DT), and DT/η determined for the obtained resin pellets are shown in Table 1. Film production was performed in the same manner as in Example 1, and the tolerable stretching limit in MD stretching was evaluated. The evaluation results are shown in Table 1.

(Example 3)

Resin pellets P-3 were produced in the same manner as the resin pellets of Example 1, except that the organic peroxide was added in an amount of 0.026 parts by weight. The melt viscosity (η), drawdown time (DT), and DT/η determined for the obtained resin pellets are shown in Table 1. Film production was performed in the same manner as in Example 1, and the tolerable stretching limit in MD stretching was evaluated. The evaluation results are shown in Table 1.

(Comparative Example 1)

Resin pellets P-4 were produced in the same manner as the resin pellets of Example 1, except that the organic peroxide was not added. The melt viscosity (η), drawdown time (DT), and DT/η determined for the obtained resin pellets are shown in Table 1. Film production was performed in the same manner as in Example 1, and the tolerable stretching limit in MD stretching was evaluated. The evaluation results are shown in Table 1.

(Comparative Example 2)

Resin pellets P-5 were produced in the same manner as the resin pellets of Example 1, except that the organic peroxide was added in an amount of 0.011 parts by weight. The melt viscosity (η), drawdown time (DT), and DT/η determined for the obtained resin pellets are shown in Table 1. Film production was performed in the same manner as in Example 1, and the tolerable stretching limit in MD stretching was evaluated. The evaluation results are shown in Table 1.

(Comparative Example 3)

One hundred parts by weight of the poly(3-hydroxyalkanoate) resin A-4 was dry-blended with 0.5 parts by weight of the lubricant C-1 and 1.0 parts by weight of the nucleating agent D-1. The resulting resin material was introduced into the hopper of a 26-mm-diameter corotating twin-screw extruder whose cylinder temperature and die temperature were set to 150°C and was melted and kneaded in the extruder. The kneaded material was extruded as a strand from the die, and the strand was solidified by passing it through a water bath filled with 45°C water. The solidified strand was cut by a pelletizer to obtain resin pellets P-6. The melt viscosity (η), drawdown time (DT), and DT/η determined for the obtained resin pellets are shown in Table 1. Film production was performed in the same manner as in Example 1, and the tolerable stretching limit in MD stretching was evaluated. The evaluation results are shown in Table 1.

(Comparative Example 4)

One hundred parts by weight of the poly(3-hydroxyalkanoate) resin A-3 was dry-blended with 0.5 parts by weight of the lubricant C-1 and 1.0 parts by weight of the nucleating agent D-1. The resulting resin material was introduced into the hopper of a 26-mm-diameter corotating twin-screw extruder whose cylinder temperature and die temperature were set to 150°C and was melted and kneaded in the extruder. The kneaded material was extruded as a strand from the die, and the strand was solidified by passing it through a water bath filled with 45°C water. The solidified strand was cut by a pelletizer to obtain resin pellets P-3. The melt viscosity (η), drawdown time (DT), and DT/η determined for the obtained resin pellets are shown in Table 1. Film production was performed in the same manner as in Example 1, and the tolerable stretching limit in MD stretching was evaluated. The evaluation results are shown in Table 1.

Table 1 reveals that in Examples 1 to 3, the maximum stretch ratio of 4.0 was achieved at all the stretch temperatures of 120 to 140°C.

It is seen that in Comparative Examples 1 and 2, the maximum stretch ratio of 4.0 was achieved at 140°C, but the maximum stretch ratio significantly decreased with decreasing stretch temperature. In particular, the maximum stretch ratio was less than 2 at 120°C, and this demonstrates that the range of possible choices of temperature conditions in stretching was narrow.

It is also seen that in Comparative Examples 3 and 4, the maximum stretch ratio was very low and less than 2 under any of the temperature conditions.

## Reference Signs List

| 11 | extruder |
|---|---|
| 12 | cast roll |
| 13, 13' | stretching roll |
| 14 | transverse stretching machine |
| 15 | winding roll |
| 21 | molten resin composition |
| 22 | film |

## Claims

1. A resin composition for stretched film molding, the resin composition comprising a poly(3-hydroxyalkanoate) resin, wherein
   a ratio between a melt viscosity (Pa•s) measured at 170°C and a shear rate of 122 $sec^{-1}$ and a drawdown time (sec) is from $3.0 \times 10^{-2}$ to $8.0 \times 10^{-2}$ (sec/[Pa•s]), the drawdown time being a time taken for the resin composition to fall 20 cm after being discharged from an orifice in measurement of the melt viscosity.

2. The resin composition for stretched film molding according to claim 1, wherein the melt viscosity is from 750 to 2000 Pa•s.

3. The resin composition for stretched film molding according to claim 1 or 2, wherein the drawdown time is from 25 to 60 sec.

4. The resin composition for stretched film molding according to claim 1 or 2, wherein the poly(3-hydroxyalkanoate) resin comprises a product resulting from melting and kneading a poly(3-hydroxyalkanoate) resin and an organic peroxide together.

5. The resin composition for stretched film molding according to claim 1 or 2, wherein the poly(3-hydroxyalkanoate) resin comprises a poly(3-hydroxybutyrate) resin.

6. A stretched film comprising the resin composition for stretched film molding according to claim 1 or 2.

7. A stretched film production method comprising:

   a film molding step of molding a film using the resin composition for stretched film molding according to claim 1 or 2; and
   a stretching step of stretching the film in at least one direction.

8. The stretched film production method according to claim 7, wherein in the stretching step, the film is stretched at a film surface temperature of 100 to 150°C.

9. The stretched film production method according to claim 7 or 8, wherein in the stretching step, the film is stretched at a stretch ratio of 2 or more.

10. The stretched film production method according to claim 7 or 8, wherein in the stretching step, the film is stretched in at least two different directions.

11. The stretched film production method according to claim 10, wherein in the stretching step, the film is stretched at a stretch ratio of 2 or more in the at least two directions.

Fig.1

## INTERNATIONAL SEARCH REPORT

| International application No. |
|---|
| **PCT/JP2023/043982** |

### A. CLASSIFICATION OF SUBJECT MATTER

*C08L 67/04*(2006.01)i; *B29C 55/02*(2006.01)i; *B29C 55/04*(2006.01)i; *C08J 5/18*(2006.01)i; *C08K 5/14*(2006.01)i; *C08L 101/16*(2006.01)i

FI: C08L67/04; B29C55/02; B29C55/04; C08J5/18 CFD; C08K5/14; C08L101/16

According to International Patent Classification (IPC) or to both national classification and IPC

### B. FIELDS SEARCHED

Minimum documentation searched (classification system followed by classification symbols)

C08L67/04; B29C55/02; B29C55/04; C08J5/18; C08K5/14; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-62759 A (KANEKA CORP.) 21 April 2022 (2022-04-21)<br>claims, examples | 1-11 |
| X | WO 2019/022008 A1 (KANEKA CORP.) 31 January 2019 (2019-01-31)<br>claims, paragraph [0074], examples, comparative examples | 1-11 |
| X | WO 2022/044836 A1 (KANEKA CORP.) 03 March 2022 (2022-03-03)<br>claims, paragraph [0061], examples | 1-11 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

International application No.

**PCT/JP2023/043982**

| Patent document cited in search report | | | Publication date (day/month/year) | Patent family member(s) | | | Publication date (day/month/year) |
|---|---|---|---|---|---|---|---|
| JP | 2022-62759 | A | 21 April 2022 | (Family: none) | | | |
| WO | 2019/022008 | A1 | 31 January 2019 | US | 2020/0181397 | A1 | |
| | | | | claims, paragraph [0085], examples, comparative examples | | | |
| | | | | EP | 3660096 | A1 | |
| | | | | CN | 110869443 | A | |
| WO | 2022/044836 | A1 | 03 March 2022 | EP | 4206283 | A1 | |
| | | | | claims, paragraph [0074], examples | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006168159 A
- WO 2013147139 A
- US 9034989 B
- WO 2019142845 A

**Non-patent literature cited in the description**

- **T. FUKUI** ; **Y. DOI**. *J. Bacteriol.*, 1997, vol. 179, 4821-4830